# EUROPEAN PATENT SPECIFICATION

(11) **EP 2 558 337 B1**
(45) Date of publication and mention of the grant of the patent: **19.06.2019**
(21) Application number: 11763136.6
(22) Date of filing: 23.03.2011
(51) Int. Cl.: B60T 8/24, B60T 8/1755, B60T 7/22, B60T 7/18, B60W 10/184, B60W 30/18, B60T 13/66

(54) **METHOD AND SYSTEM FOR CONTROL OF A MOTOR VEHICLE'S DIRECTION OF MOVEMENT**
VERFAHREN UND SYSTEM ZUR STEUERUNG DER BEWEGUNGSRICHTUNG VON MOTORFAHRZEUGEN
PROCÉDÉ ET SYSTÈME POUR LE CONTRÔLE DE LA DIRECTION DE MOUVEMENT D'UN VÉHICULE À MOTEUR

(30) Priority: 01.04.2010 SE 1050312
(43) Date of publication of application: 20.02.2013
(73) Proprietor: Scania CV AB, 151 87 Södertälje (SE)
(72) Inventor: IJKEMA, Jolle, 152 57 Södertälje (SE)
(74) Representative: Scania CV AB
(86) International application number: PCT/SE2011/050323
(87) International publication number: WO 2011/123023

(56) References cited:
- EP-A1- 2 098 423
- WO-A1-02/062639
- WO-A1-02/062639
- DE-A1- 10 155 938
- DE-A1- 10 316 413
- DE-A1- 10 316 413
- US-A- 6 017 101

## Description

### TECHNICAL FIELD

The invention relates to a method for control of a motor vehicle's direction of movement according to the preamble of claim 1. The invention relates also to a system for control of a motor vehicle's direction of movement according to the preamble of claim 6. The invention relates also to a motor vehicle.

### BACKGROUND

Motor vehicles such as trucks are normally of asymmetrical configuration in that the steering wheel is on one side of the vehicle, leading in certain driving situations to the vehicle moving obliquely during braking. Such behaviour of the vehicle is undesirable but difficult to design out mechanically. One way of mechanically reducing such oblique movement is to incorporate in the vehicle a constant difference in braking force between the left and right sides, e.g. by fitting brake cylinders of different sizes, but this would lead to greater brake lining wear on one side. Another way is to move draglink arms, alter angles of inclination of draglink arms or the like, but this is complex and expensive in that such adaptations vary from vehicle to vehicle and involve adaptation of vehicles.

Using sensors makes it possible to detect the vehicle's actual direction of movement, compare it with the driver's desired direction of movement and, on the basis of the difference, control the vehicle by means of brake units of the respective wheels when the vehicle's actual direction of movement deviates by more than a predetermined value from the desired direction of movement, i.e. from the direction ordered by the driver. Such a system is called ESP. A similar control system is disclosed in DE10155938 A1. If the vehicle is not to become undrivable because of brake pulses being sent as soon as the driver makes a deviation, it is necessary in such a system that the tolerance band for what is not treated as a deviation which would trigger brake control action should be sufficiently wide, representing a compromise between safety and drivability/robustness. A problem is that such oblique movements may occur within the tolerance band, as when they occur in the same direction within the tolerance band, with possible traffic safety hazard in situations such as forceful braking.

### OBJECTS OF THE INVENTION

An object of the present invention is to propose a method for control of a motor vehicle's direction of movement which enhances safety.

A further object of the present invention is to propose a system for control of a motor vehicle's direction of movement which enhances safety.

### SUMMARY OF THE INVENTION

These and other objects indicated by the description set out below are achieved by a method, a system and a motor vehicle of the kind indicated in the introduction which further present the features indicated in the characterising parts of the attached independent claims 1, 6 and 11. Preferred embodiments of the method and the system are defined in the attached dependent claims 2-5 and 7-10.

According to the invention, the objects are achieved with a method for control of a motor vehicle's direction of movement, comprising the steps of: determining its ordered direction of movement; determining its actual direction of movement; comparing said ordered direction of movement with said actual direction of movement; using brake units associated with the vehicle's wheels to correct its actual direction of movement when it deviates from a tolerance band of predetermined width for said ordered direction of movement, so that its actual direction of movement is brought within said tolerance band; further comprising the steps of: during the vehicle's braking, comparing the braking value during said braking with a predetermined emergency braking value and reducing said predetermined width of the tolerance band when said braking value exceeds the emergency braking value. The result is improved safety during emergency braking in that the risk of the vehicle moving obliquely is reduced and the vehicle is steered more in the ordered direction of movement. It also becomes possible to use and update existing ESP systems, allowing cost-effective improvement of emergency braking safety.

According to an embodiment of the method, the correction in the step of using brake units associated with the vehicle's wheels to correct its actual direction of movement is adapted so that activation of brake units takes place during a predetermined period of time when said braking value exceeds the emergency braking value. It thus becomes possible to use a function such as a ramp function to adapt the brake correction so that it takes place gently.

According to an embodiment of the method, said emergency braking value incorporates a predetermined retardation value, and the step of reducing the width of the tolerance band is effected when the vehicle's ordered retardation value exceeds said predetermined retardation value.

According to an embodiment of the method, said emergency braking value incorporates a predetermined brake pedal position and/or a predetermined pressure on the vehicle's brake pedal, and the step of reducing the width of the tolerance band is effected when the ordered brake pedal position exceeds said predetermined position and/or when the ordered pressure on the brake pedal exceeds said predetermined pressure.

According to an embodiment of the method comprises the step, when there is a hindrance in the vehicle's direction of movement, of using a subsystem to automatically activate its braking so that said emergency braking value is exceeded. This results in greater safety.

According to the invention, the objects are achieved with a system for control of a motor vehicle's direction of movement, comprising means for determining its ordered direction of movement, determining its actual direction of movement; means for comparing said ordered direction of movement with said actual direction of movement, brake units associated with the vehicle's wheels to correct its actual direction of movement when it deviates from a tolerance band of predetermined width for said ordered direction of movement, so that its actual direction of movement is brought within said tolerance band, which system further comprises means for comparing the braking value during the vehicle's braking with a predetermined emergency braking value, and means for reducing said predetermined width of the tolerance band when said braking value exceeds the emergency braking value. The result is improved emergency braking safety in that the risk of the vehicle moving obliquely is reduced and the vehicle is steered more in the ordered direction of movement. It also becomes possible to use and update existing ESP systems, allowing cost-effective improvement of emergency braking safety.

According to an embodiment of the system, activation of brake units for said correction when said braking value exceeds the emergency braking value is arranged to be adapted so that said activation takes place during a predetermined period of time. It thus becomes possible to use a function such as a ramp function to adapt the brake correction so that it takes place gently.

According to an embodiment of the system, said emergency braking value incorporates a predetermined retardation value of the vehicle.

According to an embodiment of the system, said emergency braking value incorporates a predetermined brake pedal position and/or a predetermined pressure on the vehicle's brake pedal.

According to an embodiment of the system comprises a subsystem for responding to hindrances in the vehicle's direction of movement by automatically activating its braking so that said emergency braking value is exceeded. This results in greater safety.

### DESCRIPTION OF THE DRAWINGS

Fig. 1 illustrates schematically a motor vehicle according to an embodiment of the invention;
Fig. 2 depicts schematically the chassis and wheels of the vehicle in Fig. 1;
Fig. 3 is a schematic diagram of deviation of the vehicle's actual direction of movement from its ordered direction of movement during normal driving and during emergency braking;
Fig. 4 is a schematic block diagram of a system for control of a motor vehicle's direction of movement according to an embodiment of the present invention;
Fig. 5 is a schematic block diagram of a system for control of a motor vehicle's direction of movement according to an embodiment of the present invention; and
Fig. 6 is a schematic block diagram of a method for control of a motor vehicle's direction of movement according to an embodiment of the present invention.

### DESCRIPTION OF EMBODIMENTS

The term "link" refers herein to a communication link which may be a physical connection such as an opto-electronic communication line, or a non-physical connection such as a wireless connection, e.g. a radio link or microwave link.

The term "emergency braking" refers herein to forceful braking/retardation of the vehicle in which the pressure on the brake pedal exceeds a certain predetermined value and/or the vehicle's brake pedal exceeds a certain predetermined angle and/or the vehicle exceeds a certain predetermined retardation, which braking/retardation according to a variant is ordered by the driver and is therefore active, and according to another variant is passive, being ordered automatically by a system such as an adaptable cruise control activated by, for example, radar when the vehicle encounters a hindrance.

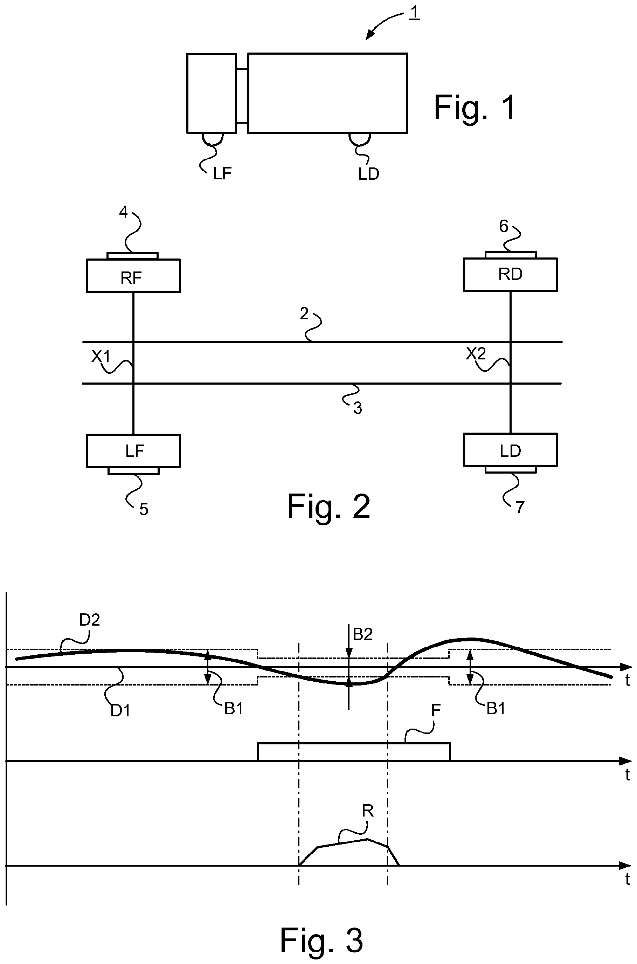

Fig. 1 depicts a side view of a vehicle 1. The exemplified vehicle 1 is a heavy vehicle in the form of a truck. The vehicle may alternatively be a bus or a passenger car. According to a variant, the vehicle takes the form of a heavy vehicle such as a truck with a forward axle and a rear powered axle, depicted with a right front wheel RF for the forward axle and a right powered wheel RD for the powered axle. The vehicle comprises a system for enhancing safety during braking according to the present invention.

Fig. 2 is a schematic plan view of the chassis and wheel shafts of the vehicle in Fig. 1. The vehicle comprises a vehicle frame 2, 3, a forward axle X1 with mutually opposite front wheels RF, LF and a rear powered axle X2 with mutually opposite powered wheels RD, LD. The vehicle incorporates a brake configuration comprising brake units associated with the vehicle's respective wheels. The right front wheel RF has a first brake unit 4 associated with it to brake the front right wheel RF upon activation of the brake. The left front wheel LF has a second brake unit 5 associated with it to brake the left front wheel LF upon activation of the brake. The right powered wheel RD has a third brake unit 6 associated with it to brake the right powered wheel RD upon activation of the brake. The left powered wheel LD has a fourth brake unit 7 associated with it to brake the left powered wheel LD upon activation of the brake.

Fig. 3 is a schematic diagram of deviation of the vehicle's actual direction of movement from its ordered direction of movement during normal driving and during emergency braking.

The system according to the present invention is adapted, as in an ESP system, to determining a direction of movement D1 ordered by the driver for the vehicle, to determining its actual direction of movement D2 and to continuously comparing the ordered direction of movement D1 with the actual direction of movement D2.

The system comprises for the ordered direction of movement D1 a predetermined tolerance band B1 with a certain width B1 corresponding to the amount by which the actual direction of movement D2 is allowed to deviate from the ordered direction of movement D1.

When the actual direction of movement D2 deviates from said tolerance band B1, the system is adapted to using brake units associated, e.g. as in Fig. 2, with the vehicle's wheels to control the vehicle by braking the wheels so that its actual direction of movement is corrected to being within said tolerance band B1.

According to the present invention, the system is adapted to comparing the braking value during the vehicle's braking with a predetermined emergency braking value corresponding to emergency braking of the vehicle. The system is adapted to reducing said predetermined width B1 of the tolerance band to an emergency braking width B2 when said braking value exceeds the emergency braking value, i.e. during emergency braking the system is adapted to narrowing the tolerance band to a predetermined width B2 by activating an emergency braking flag F so that when the actual direction of movement deviates from said narrowed tolerance band B2 the system is adapted to using the brake units to control the vehicle by braking its wheels so that its actual direction of movement is corrected to being within said narrowed tolerance band.

The vehicle's actual direction of movement is thus corrected when a minor deviation from its ordered direction of movement occurs during emergency braking of the vehicle, thereby enhancing safety.

According to an embodiment, when said braking value exceeds the emergency braking value, i.e. during emergency braking, and the actual direction of movement deviates from the ordered direction of movement, the system is arranged to adapt the activation of the brake units in order to control the vehicle's wheels so that the transition to brake control takes place gently, according in a variant to a ramp function R as in Fig. 3.

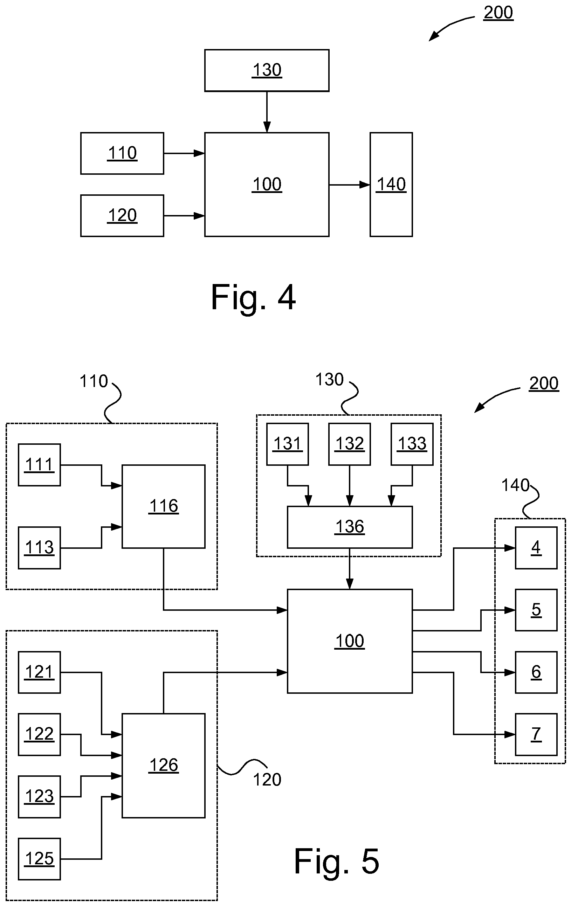

Fig. 4 is a schematic block diagram of the system 200 for control during braking of a motor vehicle according to an embodiment of the present invention.

The system comprises an electronic control unit 100 for controlling the vehicle's brake units. The electronic control unit 100 is signal-connected via a link to a first detection means 110 which is adapted to detecting ordered directions of movement of the vehicle. The electronic control unit 100 is adapted to receiving via the link a signal from the first detection means 110 which represents ordered movement direction data of the vehicle.

The electronic control unit 100 is signal-connected via a link to a second detection means 120 which is adapted to detecting the vehicle's actual direction of movements. The electronic control unit 100 is adapted to receiving via the link a signal from the second detection means 120 which represents actual movement direction data of the vehicle.

The electronic control unit 100 is signal-connected via a link to a brake detection means 130 which is adapted to detecting braking of the vehicle. The electronic control unit 100 is adapted receiving via the link a signal from the brake detection means 130 which represents braking data of the vehicle.

The electronic control unit 100 is signal-connected to a brake configuration 140.

The electronic control unit 100 is adapted to comparing ordered movement direction data with actual movement direction data. When the actual direction of movement deviates from a tolerance band for the ordered direction of movement by a predetermined width of band, the electronic control unit 100 is adapted to sending via a link to the brake configuration 140 signals which represent instructions for activating brake units of the brake configuration 140 to control the vehicle in such a way that the direction of movement is within said tolerance band, which instructions are based on movement direction deviation data.

During braking of the vehicle, the electronic control unit 100 is adapted to comparing said braking data with a predetermined emergency braking value. The electronic control unit 100 is adapted to reducing said predetermined width of the tolerance band when said braking data exceed the emergency braking value.

Fig. 5 is a schematic block diagram of a system for control during braking of a motor vehicle according to an embodiment of the present invention.

The system in Fig. 5 is substantially a more detailed variant of the system in Fig. 4, indicating alternative/additional detection means.

Consequently, in this embodiment the electronic control unit 100 is adapted to processing data and to controlling brake units on the basis of said data, like the electronic control unit 100 in Fig. 4, so the same reference notations are used.

The first detection means 110 for detecting the vehicle's ordered direction of movement comprises according to a variant a steering wheel angle sensor 111 adapted to detecting its steering wheel angle.

The first detection means 110 comprises according to a variant a brake sensor 113 adapted to detecting braking of the vehicle.

The first detection means 110 comprises in this embodiment a first movement direction control unit 116 which is signal-connected to the steering wheel angle sensor 111 via a link. The electronic control unit 100 is adapted to receiving via the link a signal from the steering wheel angle sensor 111 which represents steering wheel angle data.

The first movement direction control unit 116 is signal-connected to the brake sensor via a link. The electronic control unit 100 is adapted to receiving via the link a signal from the brake sensor 113 which represents brake data.

The first movement direction control unit 116 is adapted to using said steering wheel angle data and, where applicable, brake data as a basis for calculating movement direction data for the vehicle's ordered direction of movement.

The second detection means 120 for detecting the vehicle's actual direction of movement comprises according to a variant a gyro 121 adapted to detecting the vehicle's yaw angle rate.

The second detection means 120 comprises according to a variant a GPS (global position sensor) 122 adapted to detecting and conveying the vehicle's route deviations by determining its location.

The second detection means 120 comprises according to a variant a camera 123 adapted to detecting and conveying the vehicle's route deviations by scanning the road ahead of the vehicle.

The second detection means 120 comprises according to a variant an accelerometer 125 adapted to detecting the vehicle's lateral acceleration.

The second detection means 120 comprises in this embodiment a second movement direction control unit 126 which is signal-connected to the gyro 121 via a link. The electronic control unit 100 is adapted to receiving via the link a signal from the gyro 121 which represents yaw angle rate data.

The second movement direction control unit 126 is signal-connected to said GPS 122 via a link. The electronic control unit 100 is adapted to receiving via the link a signal from said GPS 122 which represents route deviation data.

The second movement direction control unit 126 is signal-connected to the camera 123 via a link. The electronic control unit 100 is adapted to receiving via the link a signal from the camera 123 which represents route deviation data.

The second movement direction control unit 126 is signal-connected to the accelerometer 125 via a link. The electronic control unit 100 is adapted to receiving via the link a signal from the accelerometer 125 which represents lateral acceleration.

The second movement direction control unit 126 according to a variant is adapted to calculating the vehicle's drift angles on the basis of said yaw angle rate data and lateral acceleration data.

The second movement direction control unit 126 according to a variant is adapted to calculating movement direction data for the vehicle's actual direction of movement on the basis of said route deviation data and/or yaw angle rate data.

According to an alternative, the first and the second movement direction control units 116,126 are integrated in the electronic control unit 100.

The brake detection means 130 adapted to detecting the vehicle's braking comprises in this embodiment a brake sensor 131 adapted to detecting its braking, which is achieved according to a variant by detection of brake pedal angle/position and according to another variant by detection of pressure on the accelerator pedal.

The brake detection means 130 in this embodiment comprises a retardation sensor 132 adapted to detecting the vehicle's retardation.

The brake detection means 130 according to a variant comprises a radar 133 adapted to detecting any hindrances ahead of the vehicle by scanning the road.

The brake detection means 130 comprises according to a variant a brake detection control unit 136 which is signal-connected to the brake sensor via a link. The brake detection control unit 136 is adapted to receiving from the brake sensor 131 via the link a signal which represents brake data.

The brake detection control unit 136 is signal-connected to the retardation sensor via a link. The brake detection control unit 136 is adapted to receiving from the retardation sensor 132 via the link a signal which represents retardation data.

The brake detection control unit 136 is signal-connected to the radar via a link. The brake detection control unit 136 is adapted to receiving from the radar 133 via the link a signal which represents vehicle hindrance data.

The brake detection control unit 136 is adapted to activating the vehicle's emergency braking when said vehicle hindrance data contain vehicle hindrances. According to an alternative variant, the brake detection control unit 136 is integrated in the electronic control unit 100.

The electronic control unit 100 is signal-connected to the first brake unit 4 via a link. The electronic control unit 100 is signal-connected to the second brake unit 5 via a link. The electronic control unit 100 is signal-connected to the third brake unit 6 via a link. The electronic control unit 100 is signal-connected to the fourth brake unit 7 via a link.

The brake detection control unit 136 is adapted to comparing brake data from the brake sensor 131 and to sending a signal to the electronic control unit 100 if said brake data exceed an emergency braking value. The electronic control unit 100 is adapted to comparing retardation data from the retardation sensor 132 and to sending a signal to the electronic control unit 100 if said brake data exceed an emergency braking value.

The electronic control unit 100 is adapted to reducing said predetermined width of the tolerance band when said braking value exceeds the emergency braking value.

The electronic control unit 100 is adapted to comparing ordered movement direction data with actual movement direction data. When the actual direction of movement deviates from the tolerance band for the ordered direction of movement by a predetermined width of band, the electronic control unit 100 is adapted to sending via links to the first brake unit 4 and/or the second brake unit 5 and/or the third brake unit 6 and/or the fourth brake unit 7 a signal which represents instructions to activate brake units in order to control the vehicle so that the direction of movement is within said tolerance band, which instructions are based on movement direction deviation data.

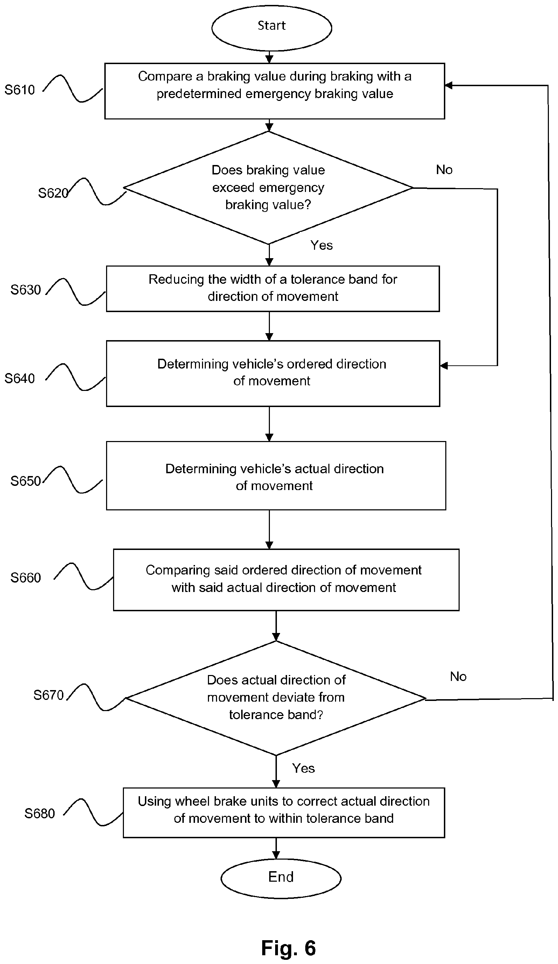

Fig. 6 is a schematic block diagram of a method according to an embodiment of the present invention.

According to an embodiment, the method for braking of a motor vehicle comprises a first step S610 in which a braking value during braking of the vehicle is compared with a predetermined emergency braking value.

According to an embodiment, the method for braking of a motor vehicle comprises a second step S620 in which the amount by which the braking value exceeds the emergency braking value is investigated.

According to an embodiment, the method for braking of a motor vehicle comprises a third step S630 which is effected when the braking value exceeds the emergency braking value, i.e. when there is emergency braking of the vehicle. In this step, the width of a tolerance band for the vehicle's actual direction of movement, i.e. the amount by which the actual direction of movement may deviate from the ordered direction of movement, is reduced.

According to an embodiment, the method for braking of a motor vehicle comprises a fourth step S640 in which the vehicle's ordered direction of movement is determined.

According to an embodiment, the method for braking of a motor vehicle comprises a fifth step S650 in which the vehicle's actual direction of movement is determined.

According to an embodiment, the method for braking of a motor vehicle comprises a sixth step S660 in which the ordered direction of movement is compared with the actual direction of movement.

According to an embodiment, the method for braking of a motor vehicle comprises a seventh step S670 in which the amount by which the actual direction of movement deviates from the tolerance band is investigated.

According to an embodiment, the method for braking of a motor vehicle comprises an eighth step S680. In this step, which is effected when the actual direction of movement deviates from the tolerance band, the actual direction of movement is corrected by brake units so that the vehicle is controlled by the brake units to being within the tolerance band.

The vehicle described above in relation to Figs. 1 and 2 has a front axle X1 and powered axle X2. However, the invention is applicable on any suitable vehicle with any desired number of axles and wheels, e.g. a front axle, a powered axle and a tag axle, or a front axle and a rear axle with two-wheel drive or four-wheel drive; two front axles, a powered axle and a tag axle; or a vehicle with more wheel shafts, e.g. ten or twelve wheel shafts with drive on one or more axles. In such cases, brake units are associated appropriately with wheels/axles, e.g. with each wheel or with each axle or with appropriate axles to brake the respective wheel upon activation of the brake unit, making it possible for the vehicle to be controlled by the brake units.

The foregoing description of the preferred embodiments of the present invention is provided for illustrative and descriptive purposes. It is not intended to be exhaustive, nor to limit the invention to the variants described. Many modifications and variants will obviously suggest themselves to one skilled in the art. The embodiments have been chosen and described in order best to explain the principles of the invention and the practical applications thereof and hence to make it possible for specialists to understand the invention for various embodiments and with the various modifications appropriate to the intended use.

## Claims

1. A method for control of a motor vehicle's direction of movement comprising the steps of:
- determining (S640) the vehicle's ordered direction of movement;
- determining (S650) the vehicle's actual direction of movement;
- comparing (S660) said ordered direction of movement with said actual direction of movement;
- using brake units associated with the vehicle's wheels to correct (S680) its actual direction of movement when it deviates from a tolerance band of predetermined width for said ordered direction of movement, so that its actual direction of movement is brought within said tolerance band;
**characterised by** the steps of:
- during the vehicle's braking, comparing (S610) the braking value during said braking with a predetermined emergency braking value, and
- reducing (S620) said predetermined width of the tolerance band when said braking value exceeds the emergency braking value.

2. A method according to claim 1, whereby the correction in the step of using brake units associated with the vehicle's wheels to correct its actual direction of movement is adapted so that activation of brake units takes place during a predetermined period of time when said braking value exceeds the emergency braking value.

3. A method according to claim 1 or 2, whereby said emergency braking value incorporates a predetermined retardation value, and the step of reducing the width of the tolerance band is effected when the vehicle's ordered retardation value exceeds said predetermined retardation value.

4. A method according to any one of claims 1-3, whereby said emergency braking value incorporates a predetermined brake pedal position and/or a predetermined pressure on the vehicle's brake pedal, and the step of reducing the width of the tolerance band is effected when the ordered brake pedal position exceeds said predetermined position and/or the ordered pressure on the brake pedal exceeds said predetermined pressure.

5. A method according to claim 1 or 2, comprising the step, when there is a hindrance in the vehicle's direction of movement, of using a subsystem to automatically activate its braking so that said emergency braking value is exceeded.

6. A system for control of the direction of a motor vehicle (1) comprising means (110) for determining its ordered direction of movement (D1), means (120) for determining its actual direction of movement (D2) and means (100) for comparing said ordered direction of movement with said actual direction of movement, and brake units (4, 5, 6, 7) associated with the vehicle's wheels and adapted to correcting its actual direction of movement (D2) when it deviates from a tolerance band of predetermined width (B1) for said ordered direction of movement (D1), so that its actual direction of movement is brought within said tolerance band, **characterised by** means (100) for, during the vehicle's braking, comparing the braking value during said braking with a predetermined emergency braking value, and means (100) for reducing said predetermined width of the tolerance band when said braking value exceeds the emergency braking value.

7. A system according to claim 6, whereby activation of brake units (4, 5, 6, 7) for said correction when said braking value exceeds the emergency braking value is arranged to be adapted so that said activation takes place during a predetermined period of time.

8. A system according to claim 6 or 7, whereby said emergency braking value incorporates a predetermined retardation value of the vehicle.

9. A system according to any one of claims 6-8, whereby said emergency braking value incorporates a predetermined brake pedal position and/or a predetermined pressure on the vehicle's brake pedal.

10. A system according to claim 6 or 7, comprising a subsystem for responding to hindrances in the vehicle's direction of movement by automatically activating the vehicle's braking so that said emergency braking value is exceeded.

11. A motor vehicle comprising a system according to any one of claims 6-10.

## Patentansprüche

1. Verfahren zum Steuern der Bewegungsrichtung eines Kraftfahrzeugs, umfassend folgende Schritte:
- Bestimmen (S640) der befohlenen Bewegungsrichtung des Fahrzeugs;
- Bestimmen (S650) der tatsächlichen Bewegungsrichtung des Fahrzeugs;
- Vergleichen (S660) der befohlenen Bewegungsrichtung mit der tatsächlichen Bewegungsrichtung;
- Verwenden von Bremseinheiten, die den Rädern des Fahrzeugs zugeordnet sind, um seine tatsächliche Bewegungsrichtung zu korrigieren (S680), wenn sie von einer Toleranzspanne einer vorbestimmten Breite für die befohlene Bewegungsrichtung abweicht, so dass seine tatsächliche Bewegungsrichtung in die Toleranzspanne gebracht wird;
**gekennzeichnet durch** folgende Schritte:
- während das Fahrzeug bremst, Vergleichen (S610) des Bremswertes während des Bremsens mit einem vorbestimmten Notbremswert, und
- Reduzieren (S620) der vorbestimmten Breite der Toleranzspanne, wenn der Bremswert den Notbremswert überschreitet.

2. Verfahren nach Anspruch 1, wobei die Korrektur in dem Schritt des Verwendens der Bremseinheiten, die den Rädern des Fahrzeugs zugeordnet sind, um seine tatsächliche Bewegungsrichtung zu korrigieren, angepasst wird, so dass die Aktivierung der Bremseinheiten während eines vorbestimmten Zeitraums stattfindet, wenn der Bremswert den Notbremswert überschreitet.

3. Verfahren nach Anspruch 1 oder 2, wobei der Notbremswert einen vorbestimmten Verzögerungswert einbezieht, und der Schritt des Reduzierens der Breite der Toleranzspanne ausgeführt wird, wenn der befohlene Verzögerungswert des Fahrzeugs den vorbestimmten Verzögerungswert überschreitet.

4. Verfahren nach einem der Ansprüche 1 bis 3, wobei der Notbremswert eine vorbestimmte Bremspedalposition und/oder einen vorbestimmten Druck auf das Bremspedal des Fahrzeugs einbezieht, und der Schritt des Reduzierens der Breite der Toleranzspanne ausgeführt wird, wenn die befohlene Bremspedalposition die vorbestimmte Position überschreitet, und/oder der befohlene Druck auf das Bremspedal den vorbestimmten Druck überschreitet.

5. Verfahren nach Anspruch 1 oder 2, umfassend den Schritt, wenn es eine Behinderung in der Bewegungsrichtung des Fahrzeugs gibt, des Verwendens eines Untersystems, um sein Bremsen automatisch zu aktivieren, so dass der Notbremswert überschritten wird.

6. System zum Steuern der Richtung eines Kraftfahrzeugs (1), umfassend Mittel (110) zum Bestimmen seiner befohlenen Bewegungsrichtung (D1), Mittel (120) zum Bestimmen seiner tatsächlichen Bewegungsrichtung (D2) und Mittel (100) zum Vergleichen der befohlenen Bewegungsrichtung mit der tatsächlichen Bewegungsrichtung, und Bremseinheiten (4, 5, 6, 7), die den Rädern des Fahrzeugs zugeordnet sind und geeignet sind, um seine tatsächliche Bewegungsrichtung (D2) zu korrigieren, wenn sie von einer Toleranzspanne einer vorbestimmten Breite (B1) für die befohlene Bewegungsrichtung (D1) abweicht, so dass seine tatsächliche Bewegungsrichtung in die Toleranzspanne gebracht wird, **gekennzeichnet durch** Mittel (100), während das Fahrzeug bremst, zum Vergleichen des Bremswertes während des Bremsens mit einem vorbestimmten Notbremswert, und Mittel (100) zum Reduzieren der vorbestimmten Breite der Toleranzspanne, wenn der Bremswert den Notbremswert überschreitet.

7. System nach Anspruch 6, wobei die Aktivierung von Bremseinheiten (4, 5, 6, 7) für die Korrektur, wenn der Bremswert den Notbremswert überschreitet ist, eingerichtet ist, um angepasst zu werden, so dass die Aktivierung während eines vorbestimmten Zeitraums stattfindet.

8. System nach Anspruch 6 oder 7, wobei der Notbremswert einen vorbestimmten Verzögerungswert des Fahrzeugs einbezieht.

9. System nach einem der Ansprüche 6 bis 8, wobei der Notbremswert eine vorbestimmte Bremspedalposition und/oder einen vorbestimmten Druck auf das Bremspedal des Fahrzeugs einbezieht.

10. System nach Anspruch 6 oder 7, umfassend ein Untersystem, um auf Behinderungen in der Bewegungsrichtung des Fahrzeugs durch automatisches Aktivieren des Bremsens des Fahrzeugs zu reagieren, so dass der Notbremswert überschritten wird.

11. Kraftfahrzeug, umfassend ein System nach einem der Ansprüche 6 bis 10.

## Revendications

1. Procédé de commande d'une direction de déplacement d'un véhicule automobile comprenant les étapes consistant en :
- la détermination (S640) de la direction de déplacement ordonnée du véhicule ;
- la détermination (S650) de la direction de déplacement réelle du véhicule ;
- la comparaison (S660) dudit sens de déplacement ordonné avec ledit sens de déplacement réel ;
- l'utilisation des unités de freinage associées aux roues du véhicule pour corriger (S680) son sens de déplacement réel quand il s'écarte d'une bande de tolérance d'une largeur prédéterminée pour ledit sens de déplacement ordonné, de sorte que son sens de déplacement réel soit amené dans ladite bande de tolérance ;
**caractérisé par** les étapes consistant en :
- pendant le freinage du véhicule, la comparaison (S610) de la valeur de freinage pendant ledit freinage à une valeur de freinage d'urgence prédéterminée, et
- la réduction (S620) de ladite largeur prédéterminée de la bande de tolérance lorsque ladite valeur de freinage dépasse la valeur de freinage d'urgence.

2. Procédé selon la revendication 1, dans lequel la correction dans l'étape d'utilisation des unités de freinage associées aux roues du véhicule pour corriger son sens de déplacement réel est adaptée de sorte que l'activation des unités de freinage a lieu pendant une période de temps prédéterminée lorsque ladite valeur de freinage dépasse la valeur de freinage d'urgence.

3. Procédé selon la revendication 1 ou 2, dans lequel ladite valeur de freinage d'urgence comprend une valeur de retard prédéterminée, et l'étape consistant à réduire la largeur de la bande de tolérance est effectuée lorsque la valeur de retard ordonnée du véhicule dépasse ladite valeur de retard prédéterminée.

4. Procédé selon l'une quelconque des revendications 1 à 3, dans lequel ladite valeur de freinage d'urgence intègre une position prédéterminée de la pédale de frein et/ou une pression prédéterminée sur la pédale de frein du véhicule, et l'étape consistant à réduire la largeur de la bande de tolérance est effectuée lorsque la position de la pédale de frein dépasse ladite position prédéterminée et/ou la pression prescrite sur la pédale de frein dépasse ladite pression prédéterminée.

5. Procédé selon la revendication 1 ou 2, comprenant l'étape consistant, lorsqu'il existe un empêchement dans la direction de déplacement du véhicule, en l'utilisation d'un sous-système pour activer automatiquement son freinage afin que ladite valeur de freinage d'urgence soit dépassée.

6. Système de commande de la direction d'un véhicule automobile (1) comprenant un moyen (110) pour la détermination de sa direction ordonnée de mouvement (D1), un moyen (120) pour la détermination de sa direction réelle de mouvement (D2) et un moyen (100) pour la comparaison dudit sens de déplacement ordonné avec ledit sens de déplacement réel, et des unités de freinage (4, 5, 6, 7) associées aux roues du véhicule et adaptées pour la correction de son sens de déplacement réel (D2) lorsqu'elle s'écarte d'une bande de tolérance de largeur prédéterminée (B1) pour ladite direction de mouvement ordonnée (D1), de sorte que sa direction de mouvement réelle soit amenée dans ladite bande de tolérance, **caractérisé par** un moyen (100) pour, pendant le freinage du véhicule, la comparaison d'une valeur de freinage pendant ledit freinage avec une valeur de freinage d'urgence prédéterminée, et un moyen (100) pour la réduction de ladite largeur prédéterminée de la bande de tolérance lorsque ladite valeur de freinage dépasse la valeur de freinage d'urgence.

7. Système selon la revendication 6, dans lequel l'activation d'unités de freinage (4, 5, 6, 7) pour ladite correction lorsque ladite valeur de freinage dépasse la valeur de freinage d'urgence est conçue pour être adaptée de sorte que ladite activation ait lieu pendant une période de temps prédéterminée.

8. Système selon la revendication 6 ou 7, dans lequel ladite valeur de freinage d'urgence incorpore une valeur de retard prédéterminée du véhicule.

9. Système selon l'une quelconque des revendications 6 à 8, dans lequel ladite valeur de freinage d'urgence incorpore une position prédéterminée de la pédale de frein et/ou une pression prédéterminée sur la pédale de frein du véhicule.

10. Système selon la revendication 6 ou 7, comprenant un sous-système pour répondre aux obstacles dans la direction de déplacement du véhicule par l'activation automatique du freinage du véhicule de sorte que ladite valeur de freinage d'urgence soit dépassée.

11. Véhicule à moteur comprenant un système selon l'une quelconque des revendications 6 à 10.
